# EUROPÄISCHE PATENTSCHRIFT

(11) **EP 3 240 708 B1**
(45) Veröffentlichungstag und Bekanntmachung des Hinweises auf die Patenterteilung: **24.02.2021**
(21) Anmeldenummer: 15823135.7
(22) Anmeldetag: 22.12.2015
(51) Int. Cl.: B60R 13/02, B60J 7/00

(54) **EINBAURAHMEN ZUR ANWENDUNG IM KRAFTFAHRZEUGBAU UND VERFAHREN ZUR HERSTELLUNG DES EINBAURAHMENS**
LINER FOR APPLICATION IN VEHICLE MANUFACTURING AND METHOD FOR MAKING SAID LINER
REVÊTEMENT POUR UNE APPLICATION DE LA FABRICATION DES VÉHICULES ET PROCÉDÉ

(30) Priorität: 29.12.2014 DE 102014227004
(43) Veröffentlichungstag der Anmeldung: 08.11.2017
(73) Patentinhaber: Dimas GmbH, 74930 Ittlingen (DE)
(72) Erfinder: SCHIRK, Reinhard, 74930 Ittlingen (DE)
(74) Vertreter: Samson & Partner Patentanwälte mbB
(86) Internationale Anmeldenummer: PCT/EP2015/002606
(87) Internationale Veröffentlichungsnummer: WO 2016/107678

(56) Entgegenhaltungen:
- EP-A1- 2 450 239
- EP-A1- 2 674 312
- WO-A2-2009/023147
- WO-A2-2010/066213
- CN-U- 202 827 774
- DE-A1- 4 202 104
- DE-A1-102007 033 553
- DE-A1-102008 060 678
- JP-A- H11 179 753
- JP-A- S63 222 925
- US-A- 4 733 904
- US-A1- 2005 006 929
- US-A1- 2013 154 313
- Anonymous: "CANNON AND DiCycloPentaDiene (DCPD): A VERY COST EFFECTIVE ANSWER -- K Trade Fair", , 2 August 2010 (2010-08-02), XP055605399, Retrieved from the Internet: URL:https://www.k-online.com/en/News/K_Arc hive/CANNON_AND_DiCycloPentaDiene_(DCPD):_ A_VERY_COST_EFFECTIVE_ANSWER [retrieved on 2019-07-15]

## Beschreibung

Die vorliegende Erfindung betrifft einen Einbaurahmen zur Anwendung im Kraftfahrzeugbau zum Definieren einer Ausnehmung und zum Befestigen und/oder Verspannen eines Materials und/oder einer Verkleidung zu der Ausnehmung hin, insbesondere zum Verspannen eines Dachhimmels um die Ausnehmung eines Schiebedachs. Des Weiteren betrifft die Erfindung ein Verfahren zur Herstellung eines solchen Einbaurahmens.

Die Erfindung beschäftigt sich ganz allgemein mit Einbaurahmen in Kraftfahrzeugen, wie sie beispielsweise bei Dachfenstern oder Schiebedächern von Kraftfahrzeugen verwendet werden. Dabei bildet der Einbaurahmen die Verbindung zwischen dem Dachhimmel, d.h. dem auf der Innenseite des Dachs gespannten Stoffs, und dem Dach selbst. Die Anwendung ist auch für beliebige andere Ausnehmungen, Aussparungen und Öffnungen in Kraftfahrzeugen denkbar, für die ein Rahmen benötigt wird, wie beispielsweise eine Ausnehmung auf der Vordersitzrückseite zum Einbau eines Bildschirms.

In der Praxis werden bislang Schiebedachrahmen aus Stahl hergestellt, wobei diese meist vierteilig ausgeführt sind. Die Ausbildung der gebogenen Rahmenform sowie von Verbindungselementen, Klemmnoppen, Aussparungen und/oder Bohrungen müssen in einzelnen Bearbeitungsschritten vorgenommen werden. Die einzelnen Rahmenteile, meist vier Rahmenschenkel, müssen vor dem Einbau mittels Schweißen und/oder Schrauben miteinander verbunden werden. Das Gewicht von herkömmlichen Stahlrahmen beträgt in etwa 0,55 kg. Die aufwendige Fertigung von Stahlrahmen sowie das Material an sich stellen einen hohen Zeit- und Kostenfaktor dar. Vor dem Hintergrund der zunehmenden Bedeutung der Gewichtsersparnis im Fahrzeugbau wirkt sich das Gewicht der Metallrahmen negativ auf das Gesamtgericht des Kraftfahrzeugs aus.

DE 10 2007 033553 A1 offenbart einen ein Verkleidungsteil, das im Spritzgussverfahren hergestellt werden kann und zur Anbringung an einem Metallrahmen eines Fahrzeugfensters vorgesehen ist.

DE 42 02 104 A1 offenbart eine Anordnung eines als Formteil ausgebildeten Dachhimmels in einem Fahrzeug, bei dem eine Profilleiste im Spritzgießverfahren hergestellt sein kann.

WO 2009/023147 A2 offenbart einen Dachhimmel, der in einer Lagerstruktur eines Fahrzeugdachs eingesetzt werden kann. Dabei können Verstärkungen, beispielsweise im Rahmen eines Injection Moulding- oder Vakuumverfahren, direkt in den Dachhimmel eingesetzt werden.

WO 2010/066213 A2 offenbart ein Dachmodul mit einer Dachöffnung, wobei das Dachmodul aus einem polymeren Material nach einem Reaktionsgießverfahren (RIM) hergestellt ist. Es verbindet das Dach mit dem Dachhimmel.

US 4 733 904 A zeigt eine Schiebedachanordnung mit einer Dichtung und einem Rahmen. Der Rahmen umfasst ein flexibles ringförmiges Element. Dieses Element weist eine Nut zur Aufnahme einer starren Wulst und eine Ausformung an der oberen Wand auf.

US 2013/154313 A1 zeigt eine Schiebedachstruktur für ein Fahrzeug, umfassend einen Montagerahmen, der aus Plastik hergestellt wird und eine Einlegeplatte, die in eine vordere Oberseite des Montagerahmens eingebracht wird.

JP S63 222 925 A zeigt einen Schiebedachrahmen mit einer Ablaufrille, die einen U-förmigen Querschnitt aufweist, um eine direkte Flutung des Rahmens zu verhindern und eine Rahmenunterwand zu versenken.

CANNON AND DiCycloPentaDiene (DCPD): A VERY COST EFFECTIVE ANSWER -K Trade Fair, (08.02.2010), URL:https://www.konline.com/en/News/K_Archive/CANNON _AND_DiCycloPentaDiene_(DCPD):_A_VERY_COST_EFFECTIVE_ANSWER erwähnt verschiedene Vorteile und Anwendungen von Dicyclopentadien (DCPD), darunter auch den Automobilbereich.

CN 202 827 774 U zeigt eine Dachabdeckung für Fahrzeuge, die eine Außenplatte umfasst. Zwischen der Außenplatte und der Dachabdeckung ist ein Widerstandsklebeband angeordnet. Die Außenplatte der Abdeckung und das Widerstandsklebeband werden mittels eines Klebstoffes mit einer Fahrzeugkarosserie verbunden.

JP H11 179753 A zeigt ein Kernmaterial, beispielsweise für eine Autotür, das Dicyclopentadien enthält. Dieses Kernmaterial wird über einen Spalt in einen Hohlraum eingespritzt.

Der vorliegenden Erfindung liegt daher die Aufgabe zugrunde, einen Einbaurahmen der gattungsbildende Art derart auszugestalten und weiterzubilden, dass er sich unter Realisierung einer hinreichenden Stabilität und eines reduzierten Gewichts auf einfache Weise kostengünstig und in wenigen Produktionsschritten fertigen lässt. Gleiches gilt für ein Verfahren.

Voranstehende Aufgabe ist erfindungsgemäß durch die Merkmale des Anspruchs 1 gelöst. Anspruch 9 löst die Aufgabe in Bezug auf ein Verfahren.

In erfindungsgemäßer Weise ist erkannt worden, dass es von ganz besonderem Vorteil ist, wenn der Einbaurahmen zur Reduktion von Materialkosten, Produktionszeit und Gewicht einteilig aus einem leichten Material, nämlich aus Kunststoff durch das Reaction Injection Moulding (RIM)-Verfahren hergestellt ist. Das RIM-Verfahren ist ein Urformverfahren zur Herstellung von Kunststoffformteilen. Dabei werden zwei Komponenten sowie eventuell weitere Zusätze in einem Mischer intensiv gemischt und unmittelbar anschließend als Reaktionsmasse in ein formgebendes Werkzeug, beispielsweise ein Alu-Schäumwerkzeug, gespritzt. Denkbar ist ebenso das Reinforced Reaction Injection Moulding (RRIM). Dabei werden in idealer Weise die Eigenschaften von Kunststoffen, wie hohe Festigkeit, chemische Beständigkeit bei gleichzeitig niedrigem Gewicht im Vergleich zu Metallen genutzt. Des Weiteren können sämtliche Bereiche und Elemente des Einbaurahmens in einem Herstellungsschritt integral ausgeformt werden. Durch die einteilige Bauweise wird die nötige Stabilität des Einbaurahmens realisiert. Außerdem ist ein sortenreines Recyceln des Einbaurahmens möglich.

Folglich ist mit dem erfindungsgemäßen Einbaurahmen ein Einbaurahmen realisiert, der sich unter Realisierung einer hinreichenden Stabilität und eines reduzierten Gewichts auf einfache Weise kostengünstig und in wenigen Produktionsschritten fertigen lässt.

Der Einbaurahmen ist aus einem steifen polymeren Material gefertigt. In ganz besonders vorteilhafter Weise handelt es sich bei dem polymeren Material um Dicyclopentadien (DCPD). Dieses Material lässt sich nach dem DCPD-Reaktionsgießverfahren (RIM) zum Festkörper verarbeiten.

Zum chemischen Aufbau und zur Verarbeitung von DCPD sei folgendes ausgeführt: Dicyclopentadien fällt als Nebenprodukt im Crack-Prozess bei der Benzinherstellung an. In einer Reinheit von 99% erhält es im Gemisch mit Norbornen eine oberhalb - 2°C bis 0°C flüssige Konsistenz. In Gegenwart von Katalysatoren wie Alkalylaluminium findet durch Aufspaltung von Doppelbindungen und Ringöffnungen eine Polymerisation zu einem vernetzten DCPD statt. Vermischt mit Additiven lässt sich DCPD in Form von Zwei-Komponentensystemen mit konventionellen RIM-Anlagen verarbeiten. DCPD weist eine extrem hohe Zähigkeit, Steifigkeit und Formbeständigkeit in der Wärme auf. Die Einsatztemperatur von DCPD liegt zwischen -40°C und 110°C. Auch insoweit eignet sich DCPD ganz besonders zur Herstellung von Einbaurahmen, die zur sicheren Befestigung hinreichend steif seien müssen. Eine einfache sortenreine Fertigung - und Entsorgung - ist gewährleistet. In weiter vorteilhafter Weise ragen auf der Außenseite des Einbaurahmens Clips und/oder Klemmnoppen nach außen und dienen unter Zugrundelegung von Spannung und Formschluss zum klemmenden Eingriff in eine Ausnehmung oder einen Rahmen.

In idealerweise sind die Clips oder Klemmnoppen als integraler Bestrandteil des Einbaurahmens ausgebildet, werden also in demselben Herstellungsschritt wie der Einbaurahmen selbst gefertigt. Besonders vorteilhaft ist es, wenn der Einbaurahmen aus Vollmaterial ausgebildet ist und, im Gegensatz zu heute herkömmlichen Stahlrahmen, die Clips oder Klemmnoppen insgesamt oder teilweise mit Material hinterfüllt sind.

Die erforderliche Klemmkraft resultiert in idealerweise ausschließlich aus der materialspezifischen Steifigkeit bzw. Festigkeit des Materials des Einbaurahmens.

Eine sichere Anbringung des Einbaurahmens wird insbesondere dadurch gewährleistet, dass die Clips oder Klemmnoppen rundum, vorzugsweise äquidistant, am Randbereich des Einbaurahmens ausgebildet sind.

Gemäß der Erfindung ist die Oberfläche des Einbaurahmens zum Schutz vor Ausgasung aber auch zum Schutz der Oberfläche vor dem Einbau grundiert und/oder lackiert, und ist so abgeschlossen.

In besonders vorteilhafter Weise beträgt die Wanddicke des Einbaurahmens zumindest bereichsweise 2 mm. Ein Verlauf bzw. Variation der Wandstärke vom oberen Ende des Einbaurahmens zum unteren Ende des Einbaurahmens ist denkbar.

Ausnehmungen bzw. Bohrungen im Einbaurahmen zur Befestigung des Einbaurahmens selbst und/oder zur Befestigung eines Materials und/oder einer Verkleidung sind in vorteilhafter Weise in Klemm- bzw. Ausnehmungsrichtung - d.h. in Z-Richtung - ausgebildet. Diese Ausnehmungen und/oder Bohrungen sind vorzugsweise äquidistant am Einbaurahmen ausgebildet. Sie können bereits im Herstellungsprozess des Einbaurahmens oder in einem zusätzlichen Arbeitsschritt ausgebildet werden.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Ansicht ein Ausführungsbeispiel eines erfindungsgemäßen Einbaurahmens,
- Fig. 2: in einer schematischen Draufsicht den Gegenstand aus Fig. 1,
- Fig. 3: in einer schematischen Seitenansicht den Gegenstand aus den Figuren 1 und 2,
- Fig. 4: in einer schematischen Seitenansicht, gegenüber Fig. 3 um 90°gedreht, den Gegenstand aus den Figuren 1 bis 3,
- Fig. 5: in einer schematischen Ansicht, vergrößert, einen Abschnitt des Gegenstands aus den Figuren 1 bis 4,
- Fig. 6: schematisch den Querschnitt des Gegenstands aus den Figuren 1 bis 5 an einem in Fig. 5 gezeigten Eckpunkt,
- Fig. 7: in einer schematischen Ansicht einen aus der Praxis bekannten Einbaurahmen aus Metall und
- Fig. 8: eine schematische Draufsicht des Gegenstands aus Fig. 7.

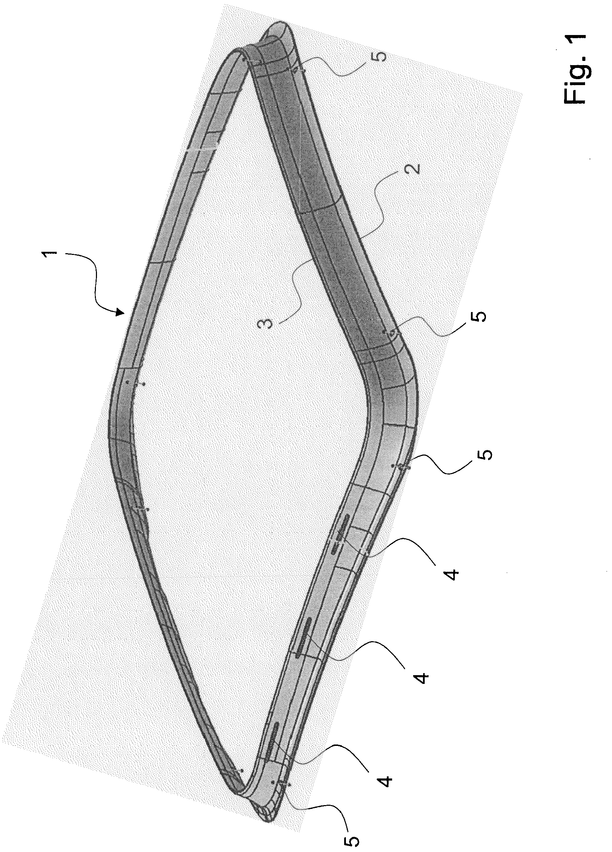

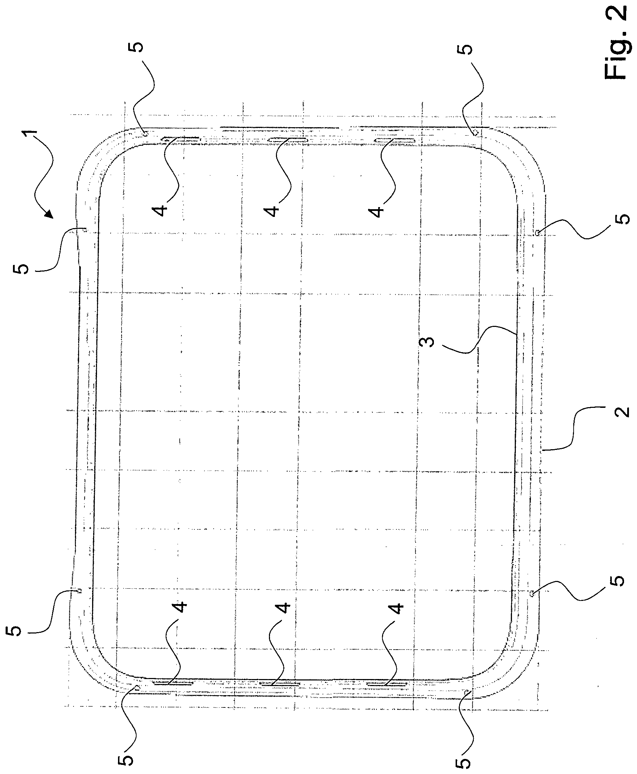

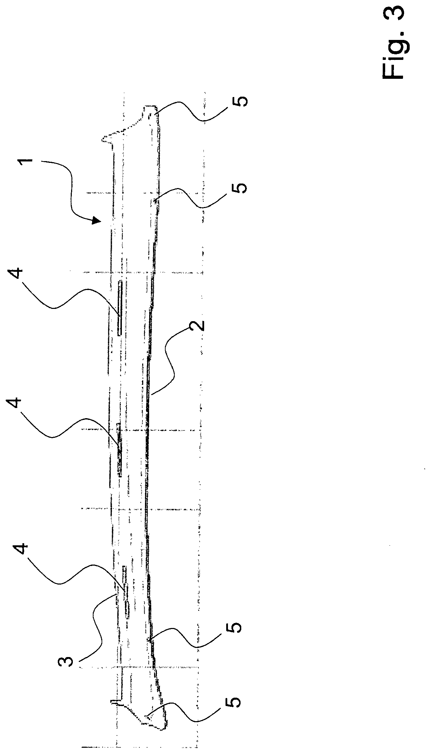

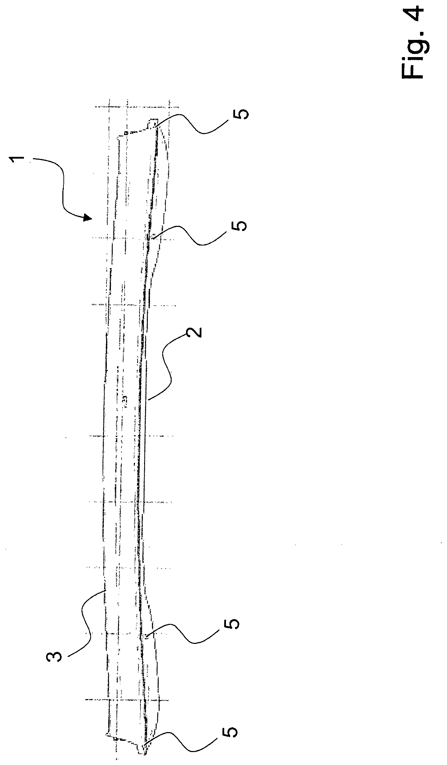

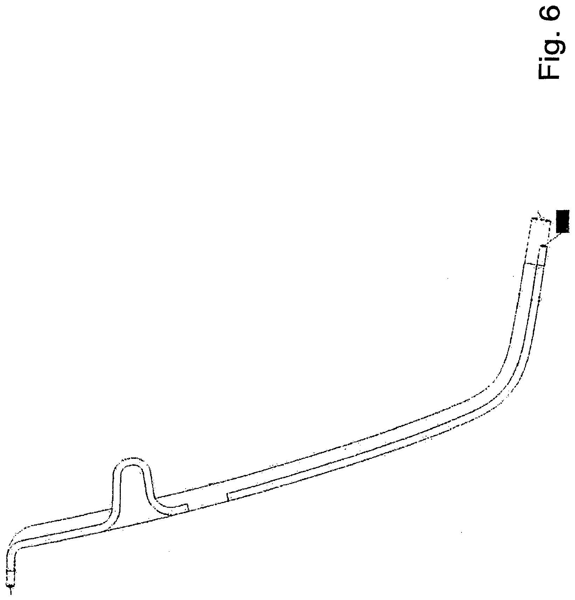

Figuren 1 bis 6 zeigen unterschiedliche schematische Ansichten eines bevorzugten Ausführungsbeispiels eines erfindungsgemäßen Einbaurahmens. Der Einbaurahmen ist einteilig ausgeführt. Wesentlicher Bestandteil des Einbaurahmens ist ein viereckiges Gerüst 1 mit vier Rahmenschenkeln, welches derart geformt ist, dass es von Innen in eine Ausnehmung eines Kraftfahrzeugdachs positionierbar ist. Vom unteren Ende 2 zum oberen Ende 3 verengt der Einbaurahmen konisch, so dass der innere Durchmesser am oberen Ende 3 des Einbaurahmens kleiner ist als der am unteren Ende 2 des Einbaurahmens (Fig. 1, 3 und 4). Das obere Ende 3 des Einbaurahmens ragt in die Rahmenmitte, das untere Ende 2 des Einbaurahmens nach außen hin weg vom Gerüst 1 (insb. Fig. 6).

Der Einbaurahmen weist an der äußeren Seite längliche Clips 4 auf, die nach außen abragen und zum klemmenden Eingriff in einen in die Ausnehmung eines Kraftfahrzeugdachs befestigten Rahmen dienen. Die Clips 4 sind integraler Bestandteil des Einbaurahmens und ebenso wie das Gerüst aus Vollmaterial ausgebildet bzw. insgesamt mit Material hinterfüllt (Fig. 6). Die erforderliche Klemmkraft resultiert ausschließlich aus der materialspezifischen Steifigkeit bzw. Festigkeit des Materials des Einbaurahmens bzw. der Clips 4.

Am unteren Ende 2 des Einbaurahmens sind Ausnehmungen 5 in Klemm- bzw. Ausnehmungsrichtung, d.h. in Z-Richtung, ausgebildet, die bereits während des Herstellungsprozesses des Einbaurahmens gefertigt sind. Diese Ausnehmungen 5 dienen dem Verspannen des in der Zeichnung nicht gezeigten Dachhimmels um die Ausnehmung eines Schiebedachs. Der Einbaurahmen stellt somit eine Verbindung zwischen dem Dachhimmel, also dem Stoff, und dem Dach eines Kraftfahrzeugs dar.

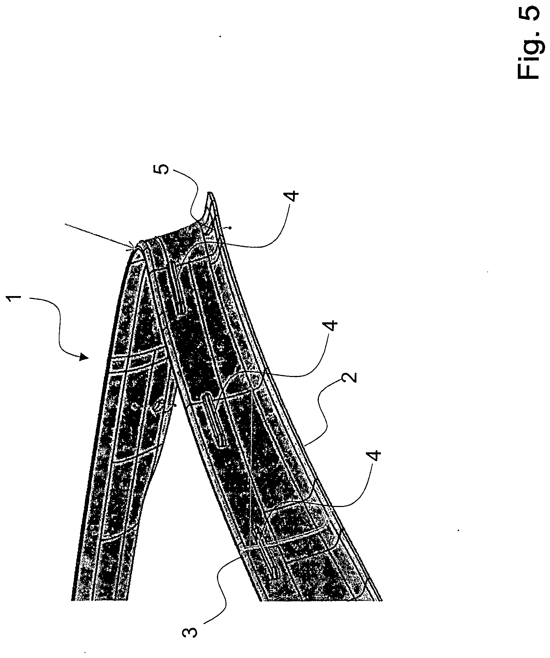

Fig. 5 zeigt eine schematische Ansicht einer Ecke des Einbaurahmens. Fig. 6 zeigt schematisch den Querschnitt des Einbaurahmens in dem in Fig. 5 gezeigten äußersten Eckpunkt.

Die Außenhaut wurde bei dem erfindungsgemäßen Einbaurahmen im Gegensatz zu bekannten Einbaurahmen mit 0,75 mm zumindest bereichsweise nach außen aufgedickt. Am oberen, nach innen gerichteten Ende 3 des Einbaurahmens beträgt die Wanddicke 0,75 mm, im langen, mittleren Bereich sowie am unteren Ende 2 des Einbaurahmens 2 mm. Der Radius an der oberen Kante zwischen dem oberen Ende 3 und dem langen, mittleren Bereich beträgt 3,2 mm.

Der Einbaurahmen ist einteilig und insgesamt aus steifem polymeren Material, nämlich aus Dicyclopentadien (DCPD) bzw. Polydicyclopentadien (PDCPD) im Reaction Injection Moulding (RRIM)-Verfahren, hergestellt.

Durch den Einsatz von Kunststoff kann mit dem erfindungsgemäßen Einbaurahmen eine Gewichtseinsparung von über 60 % gegenüber herkömmlichen Einbaurahmen realisiert werden. Durch die einteilige Bauweise werden sowohl die Produktionszeit als auch die Materialkosten gesenkt. Des Weiteren begünstigt die einteilige Bauweise die Stabilität des Einbaurahmens.

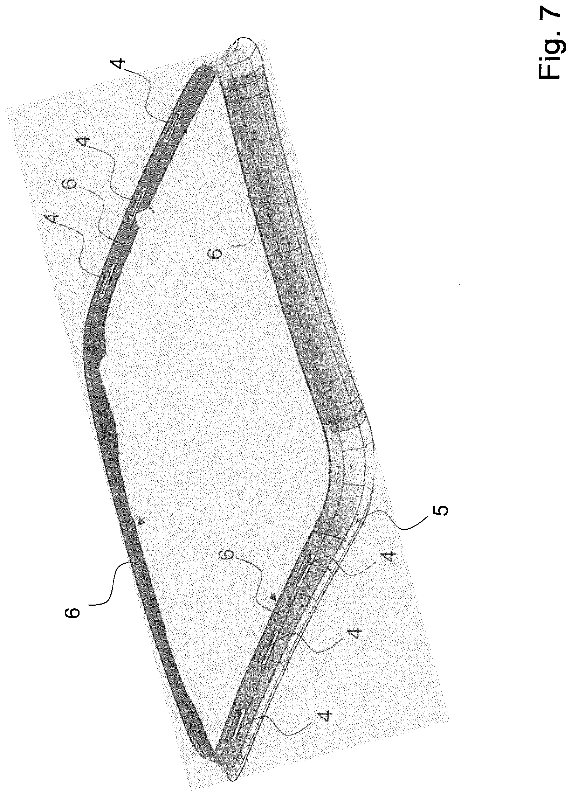

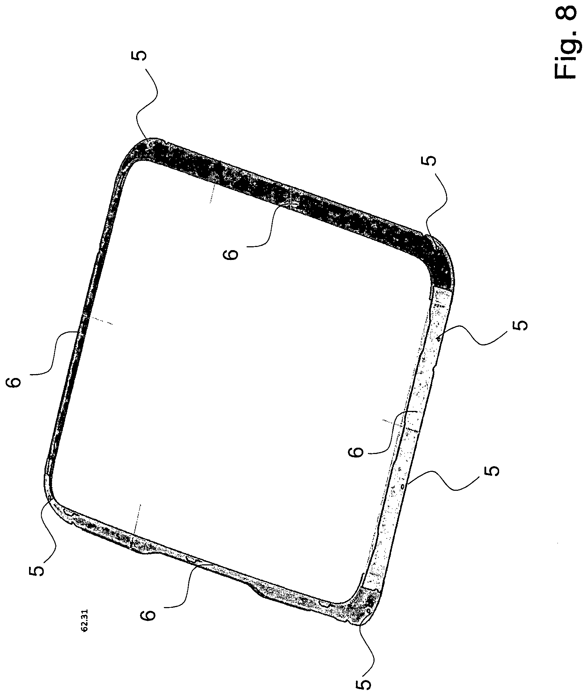

Die Fig. 7 und 8 zeigen einen Einbaurahmen wie er bislang aus der Praxis bekannt ist. In seiner Grundform ähnelt er dem erfindungsgemäßen Einbaurahmen, weist jedoch entscheidend Unterschiede auf. Der Einbaurahmen ist aus vier einzelnen Rahmenschenkeln 6 aus Stahl gefertigt und wird vor dem Einbau durch Schweißen zusammengebaut. Die Klemmnoppen 4 sind durch Schneiden und Biegen aus dem Blech ausgebildet, so dass unterhalb der Klemmnoppen 4 offene Bereiche und hinter den Klemmnoppen 4 Hohlräume entstehen. Die Bohrungen 3 am unteren Ende 2 des Einbaurahmens müssen in einem zusätzlichen Arbeitsschritt gefertigt werden.

Zur Vermeidung von Wiederholgen sei in Bezug auf Merkmale, die sich den Figuren nicht entnehmen lassen, auf den allgemeinen Teil der Beschreibung verwiesen.

Schließlich sei angemerkt, dass das voranstehend beschriebene Ausführungsbeispiel lediglich zur beispielshaften Erörterung der beanspruchten Lehre dient, diese jedoch nicht auf das Ausführungsbeispiel einschränken.

### Bezugszeichenliste

- 1: Gerüst des Einbaurahmens
- 2: unteres Ende des Einbaurahmens
- 3: oberes Ende des Einbaurahmens
- 4: Clips/ Klemmnoppen
- 5: Ausnehmungen/ Bohrungen
- 6: einzelne Rahmenschenkel

## Patentansprüche

1. Einbaurahmen (1) zur Anwendung im Kraftfahrzeugbau zum Definieren einer Ausnehmung eines Schiebedachs und zum Befestigen und/oder Verspannen eines Materials eines Dachhimmels um die Ausnehmung und/oder einer Verkleidung zu der Ausnehmung hin, wobei der Einbaurahmen die Verbindung zwischen dem Dachhimmel und dem Dach selbst bildet,
**dadurch gekennzeichnet, dass** der Einbaurahmen im Reaction Injection Moulding (RIM)-Verfahren einteilig aus steifen polymeren Material, nämlich Dicyclopentadien (DCPD) oder Poly-Dicyclopentadien (PDCPD) hergestellt ist, und die Oberfläche des Einbaurahmens grundiert und/oder lackiert ist und so abgeschlossen ist.

2. Einbaurahmen nach Anspruch 1, **dadurch gekennzeichnet, dass** auf der Außenseite des Einbaurahmens Clips oder Klemmnoppen nach außen abragen und unter Zugrundelegung von Spannung und Formschluss zum klemmenden Eingriff in einen Rahmen dienen.

3. Einbaurahmen nach Anspruch 1 oder 2, **dadurch gekennzeichnet, dass** die Clips oder Klemmnoppen als integraler Bestandteil des Einbaurahmens ausgebildet sind.

4. Einbaurahmen nach einem der Ansprüche 1 bis 3, **dadurch gekennzeichnet, dass** der Einbaurahmen aus Vollmaterial ausgebildet ist und insb. die Clips oder Klemmnoppen insgesamt oder teilweise mit Material hinterfüllt sind.

5. Einbaurahmen nach einem der Ansprüche 1 bis 4, **dadurch gekennzeichnet, dass** die erforderliche Klemmkraft ausschließlich aus der materialspezifischen Steifigkeit bzw. Festigkeit des Materials des Einbaurahmens resultiert.

6. Einbaurahmen nach einem der Ansprüche 1 bis5, **dadurch gekennzeichnet, dass** die Clips oder Klemmnoppen rundum, vorzugsweise äquidistant, am Randbereich des Einbaurahmens ausgebildet sind.

7. Einbaurahmen nach einem der Ansprüche 1 bis 6, **dadurch gekennzeichnet, dass** die Wanddicke des Einbaurahmens zumindest Bereichsweise 2 mm beträgt.

8. Einbaurahmen nach einem der Ansprüche 1 bis 7, **dadurch gekennzeichnet, dass** vorzugsweise äquidistante Ausnehmungen und/oder Bohrungen in Klemm bzw. Ausnehmungsrichtung im Herstellungsprozess des Einbaurahmens und/oder in einem zusätzlichen Arbeitsgang ausgebildet sind.

9. Verfahren zur Herstellung eines Einbaurahmens (1) nach einem
der Ansprüche 1 bis 8, **dadurch gekennzeichnet, dass** der Einbaurahmen im Reaction Injection Moulding (RIM)-Verfahren einteilig aus steifen polymeren Dicyclopentadien (DCPD) oder Poly-Dicyclopentadien (PDCPD) hergestellt wird.

## Claims

1. Installation frame (1) for use in motor vehicle construction for defining a recess in a sunroof and for fastening and/or bracing a material of a roof liner around the recess and/or a lining towards the recess, the installation frame itself forming the connection between the roof liner and the roof, **characterised in that** the installation frame is produced in one piece from rigid polymeric material, namely dicyclopentadiene (DCPD) or poly-dicyclopentadiene (PDCPD), using the reaction injection moulding (RIM) method, and the surface of the installation frame is primed and/or painted and thus sealed.

2. Installation frame according to claim 1, **characterised in that** clips or clamping knobs protrude outward on the outside of the installation frame and are used for clamping engagement in a frame on the basis of tension and positive locking.

3. Installation frame according to either claim 1 or claim 2, **characterised in that** the clips or clamping knobs are designed as an integral part of the installation frame.

4. Installation frame according to any of claims 1 to 3, **characterised in that** the installation frame is made of solid material and in particular the clips or clamping knobs are completely or partially backfilled with material.

5. Installation frame according to any of claims 1 to 4, **characterised in that** the required clamping force results exclusively from the material-specific rigidity or strength of the material of the installation frame.

6. Installation frame according to any of claims 1 to 5, **characterised in that** the clips or clamping knobs are formed all around, preferably equidistantly, on the edge region of the installation frame.

7. Installation frame according to any of claims 1 to 6, **characterised in that** the wall thickness of the installation frame is at least 2 mm in regions.

8. Installation frame according to any of claims 1 to 7, **characterised in that** preferably equidistant recesses and/or bores are formed in the clamping or recess direction in the production process of the installation frame and/or in an additional operation.

9. Method for producing an installation frame (1) according to any of claims 1 to 8, **characterised in that** the installation frame is produced in one piece from rigid polymeric dicyclopentadiene (DCPD) or poly-dicyclopentadiene (PDCPD) using the reaction injection moulding (RIM) method.

## Revendications

1. Cadre de montage (1) pour une utilisation dans le secteur de la construction automobile pour définir un évidement d'un toit ouvrant et pour fixer et/ou assembler par serrage un matériau d'un pavillon autour de l'évidement et/ou un revêtement en direction de l'évidement, dans lequel le cadre de montage forme la liaison entre le pavillon et le toit lui-même,
**caractérisé en ce que**
le cadre de montage est fabriqué par le procédé RIM (Reaction Injection Moulding - moulage par injection et réaction) en une pièce, à partir d'un matériau polymère rigide, à savoir de dicyclopentadiène (DCPD) ou de poly-dicyclopentadiène (PDCPD) et la surface du cadre de montage est dotée d'un apprêt et/ou d'un vernis et est achevée ainsi.

2. Cadre de montage selon la revendication 1, **caractérisé en ce que** sur le côté extérieur du cadre de montage, des clips ou des tétons de serrage dépassent vers l'extérieur et servent à venir en prise par serrage avec un cadre en se basant sur une tension et une complémentarité de forme.

3. Cadre de montage selon la revendication 1 ou 2, **caractérisé en ce que** les clips ou les tétons de serrage sont réalisés en tant que partie intégrante du cadre de montage.

4. Cadre de montage selon l'une quelconque des revendications 1 à 3, **caractérisé en ce que** le cadre de montage est réalisé à partir d'un matériau massif et en particulier les clips ou tétons de serrage sont remplis par l'arrière globalement ou en partie de matériau.

5. Cadre de montage selon l'une quelconque des revendications 1 à 4, **caractérisé en ce que** la force de serrage requise résulte exclusivement de la rigidité spécifique au matériau ou de la solidité du matériau du cadre de montage.

6. Cadre de montage selon l'une quelconque des revendications 1 à 5, **caractérisé en ce que** les clips ou les tétons de serrage sont réalisés tout autour, de préférence de manière équidistante, sur la zone de bord du cadre de montage.

7. Cadre de montage selon l'une quelconque des revendications 1 à 6, **caractérisé en ce que** l'épaisseur de paroi du cadre de montage est au moins par endroits de 2 mm.

8. Cadre de montage selon l'une quelconque des revendications 1 à 7, **caractérisé en ce que** de préférence des évidements et/ou alésages équidistants sont réalisés dans la direction de serrage ou d'évidement lors du processus de fabrication du cadre de montage et/ou dans un cycle de travail supplémentaire.

9. Procédé pour la fabrication d'un cadre de montage (1) selon l'une quelconque des revendications 1 à 8, **caractérisé en ce que** le cadre de montage est fabriqué par le procédé RIM (Réaction Injection Moulding) en une pièce, à partir de dicyclopentadiène (DCPD) polymère rigide ou de poly-dicyclopentadiène (PDCPD).
